# EUROPEAN PATENT SPECIFICATION

(11) **EP 3 381 773 B1**
(45) Date of publication and mention of the grant of the patent: **22.04.2020**
(21) Application number: 17425040.7
(22) Date of filing: 29.03.2017
(51) Int. Cl.: B62D 59/04

(54) **MOVEMENT SYSTEM FOR VEHICLE TRAILERS AND MOVEMENT METHOD**
BEWEGUNGSSYSTEM FÜR FAHRZEUGANHÄNGER UND BEWEGUNGSVERFAHREN
SYSTÈME DE DÉPLACEMENT DESTINÉ À DES REMORQUES ET MÉTHODE DE DÉPLACEMENT

(43) Date of publication of application: 03.10.2018
(73) Proprietor: OMC Axles & Trailers S.r.l., 70026 Modugno (BARI) (IT); Palumbo, Gennaro, 84091 Battipaglia (Salerno) (IT)
(72) Inventor: Palumbo, Gennaro, 84091 Battipaglia (Salerno) (IT)
(74) Representative: Tansini, Elio Fabrizio

(56) References cited:
- GB-A- 2 510 574
- GB-A- 2 521 647
- US-A- 4 140 194

## Description

The present invention relates to a movement system for vehicle trailers.

In particular, the present invention relates to a movement device applied to trailers or semi-trailers of motor vehicles and in general to any type of towed trailer / caravan.

It should be specified that in the following discussion the term "trailer" will be used to indicate any type of truck or system towed by a motor vehicle. As is known, trailers consist of a support structure (carriage) supported by respective towed wheels and therefore passive, i.e. not provided with a respective drive.

The trailer is connected to the towing vehicle and is controlled by the driver operating it from said vehicle. In some cases, such as for example in the case of small carriages, these can also be moved manually for small displacements. Typically, the manual movement is implemented in the parking phase of small carriages.

The connection between the trailer and drive unit can be achieved by means of suitable coupling systems which provide both a mechanical and electrical connection, in order to power the lighting devices positioned at the sides and rear of the trailer.

In addition, in some cases the wheels of the trailer are provided with suitable braking systems operated by the driver of the vehicle, and implemented directly or indirectly on the brakes installed on the trailers and braked axles. In this way, especially for trailers with very heavy loads, the trailer wheels facilitate the braking action determined by the drive unit.

However, the known trailers briefly described above have significant drawbacks and limitations in their application.

In particular, especially in the case of lightweight carriages, such as trailers for small boats, the above-mentioned manual movement operations turn out to be particularly awkward.

In fact, in this case, the trailer is moved manually to be positioned for example to load / unload the boat onto/from the carriage. As a result, the manual action proves strenuous and in some cases even dangerous given the masses of the carriage and of the respective boat.

Again, for other types of trailers loading various types of merchandise, the manual movement, especially in full load conditions, may prove particularly strenuous, and sometimes impossible,
A further important drawback derives from the excessive consumption of the towing vehicle and consequently the substantial emission of pollutants. This disadvantage is even more significant in the case of trailers with very high masses and therefore with very heavy loads which require high fuel consumption to be moved.

The document US 4,140,194 A, considered as the closest prior art, discloses the preamble of the claim 1.

GB 2,521,647 A and GB 2,510,574 A are further examples of movement systems for trailer.

The purpose of the present invention is to solve the problems encountered in the prior art by proposing a movement system for trailers of vehicles which overcomes the limitations and drawbacks mentioned above.

In particular, one purpose of the present invention to provide a movement system for vehicle trailers which is able to significantly reduce the fuel consumption of the towing vehicle and consequently the emission of pollutants, even with very high load masses.

Another purpose of the present invention is to provide a movement system for trailers that it is able to assist and facilitate the manual movement of said trailer, avoiding excessive effort by the operator.

Finally, another purpose of the present invention is to provide a movement system for trailers that is versatile, utilisable for any type of trailer and easy to apply.

In particular, the present invention relates to a movement system for trailers of vehicles, fitted with movement means operatively associable to at least one of a wheel of said trailer and at least one reversible connection member interposed between the movement means and the respective wheel. The reversible connection member in turn has a first shaft keyed to a wheel hub and has a first connection joint connected in rotation to the first shaft and a second shaft keyed to said connection means and having a second connection joint connected in rotation to said second shaft. The connection member also has means for moving the second joint to axially slide said second joint along the longitudinal extension of the second shaft between a connection configuration to the first joint in which movement is transmitted from the means to the wheel and a disconnection configuration to the first joint in which movement is not transmitted.

In this way, from a disconnected condition of the two joints in which the trailer wheels are idle (not motorized), by means of the movement means, it is possible to couple the motor means to each wheel in order to motorize them.

In addition, the movement means comprise at least one clutch lever interposed between said second joint and an actuator to define said connection and disconnection configurations. Advantageously, by manually or automatically acting on the actuator, the lever moves the second joint to provide for a motorization of the wheels or vice versa to disconnect them from the respective motor means.

The dependent claims correspond to possible embodiments of the invention.

Such description is provided with reference to the accompanying figures, also having a purely illustrative and therefore non-limiting purpose, wherein:
- Figures 1a and 1b are schematic and perspective views of a movement system for vehicle trailers according to the present invention and in two respective operating conditions;
- Figures 2a and 2b show enlarged views of two constructional details, respectively of Figure 1a and 1b;
- Figure 3 is a perspective and exploded view of a constructive part of the movement system according to the present invention;
- Figure 4 is a perspective view and a cross-section view of a constructive part of the movement system according to the present invention;
- Figure 4a is a perspective view and longitudinal cross-section of a constructive part of the system according to the present invention and according to a further embodiment;
Figures 5a and 5b show schematic views and in perspective of a movement system according to a further embodiment and in two respective operating conditions; and
- Figure 6 shows a perspective view from below of a portion of a trailer for vehicles equipped with a movement system according to the present invention.

With reference to the appended figures, reference numeral 1 globally denotes a movement system for vehicle trailers 100.

In particular, the present invention finds particular application in trailers 100 of the type briefly described above, of motor vehicles not shown in the appended figures since not part of the present invention.

It should however be specified that the present invention can be applied to non-motorized wheels of any type of motorized or towed vehicle.

In other words, the present invention finds advantageous application if applied to non-motorized wheels of towed trailers 100 or of motor vehicles. For greater simplicity, in the course of the present discussion, the term "trailer" will refer to any type of non-motorized vehicle, mostly used to transport goods, vehicles or boats, which is towed by a respective motorized vehicle.

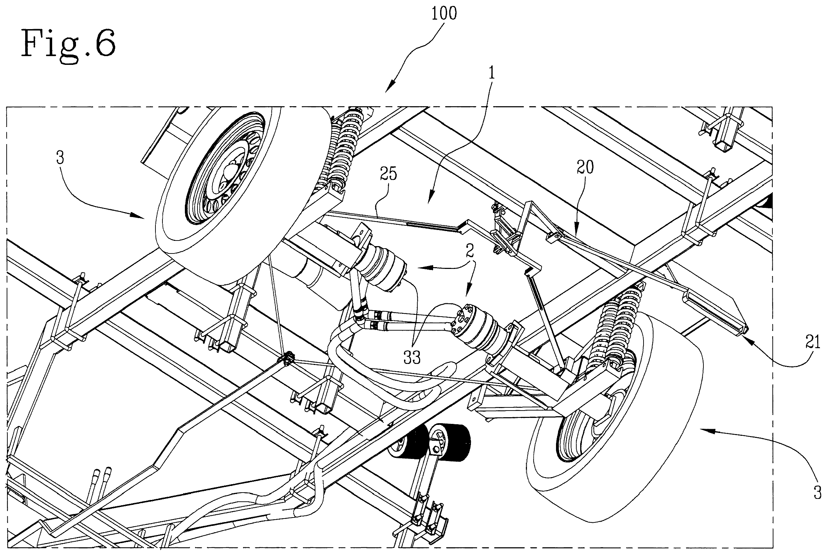

To such purpose, Figure 6 illustrates purely by way of non-limiting example a trailer 100 for the transport of boats, equipped with the system 1 of the present invention.

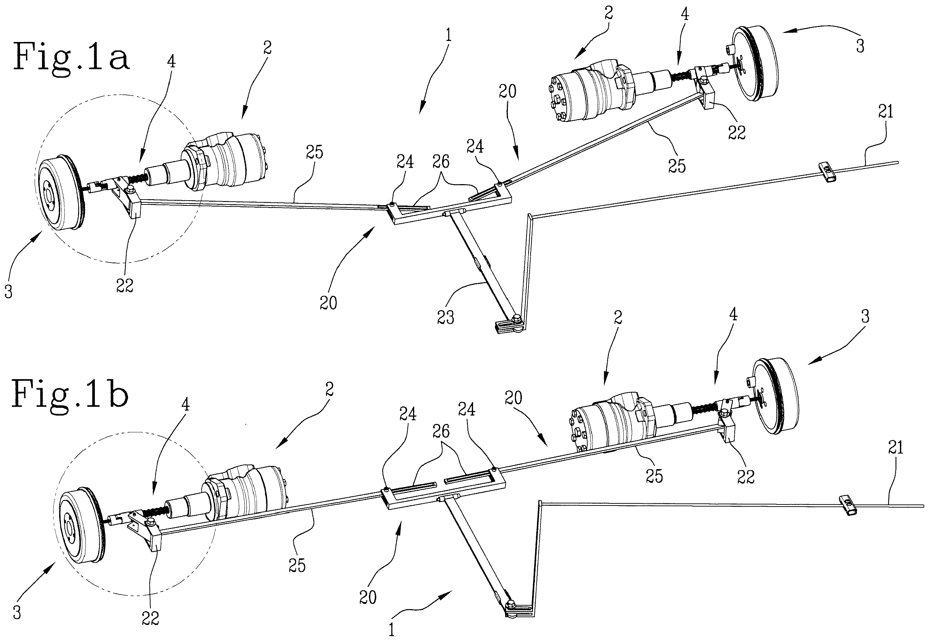

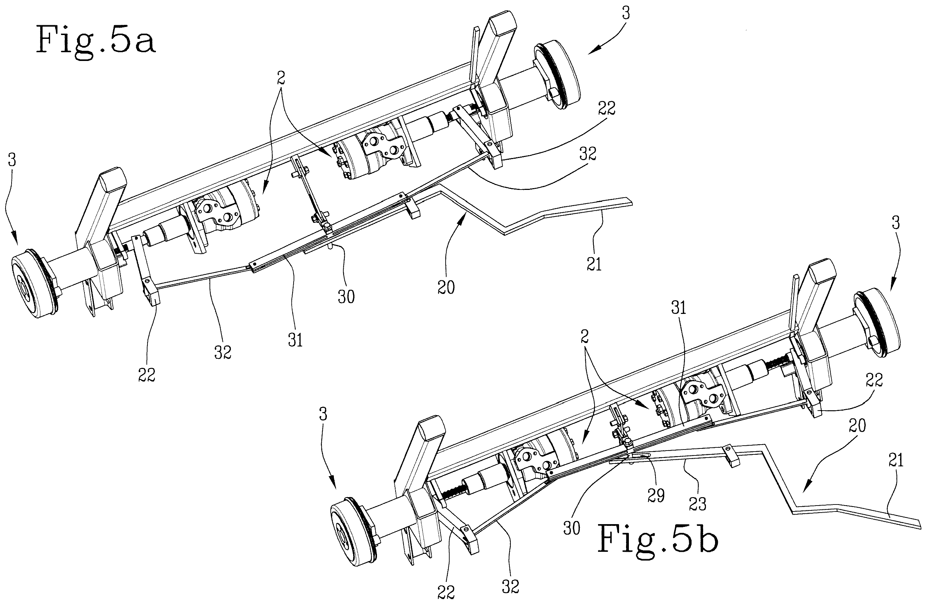

Figures 1a, 1b, 5a and 5b instead show the system 1 applied to wheels and axles belonging to trailers of various types.

Advantageously, the system 1 is applicable to any wheel on the trailers.

With particular reference to Figures 1a and 1b, the system 1 comprises movement means 2 operatively associable to at least one wheel 3 of the trailer 100. Preferably, the movement means 2 are coupled to a pair of wheels 3 of the trailer 100.

Between each means 2 and the respective wheel 3 a reversible connection member 4 extends adapted to connect or disconnect the movement means 2 to the wheel 3 to determine the transmission of movement to the wheel or not to transfer the movement to the wheel 3.

The reversible connection means 4 have a first shaft 5 keyed to a hub 6 of the wheel 3 and having a first connection joint 7 connected in rotation to the first shaft 5.

It should be noted that in the appended figures a hub 6 is generally shown as the assembly that transfers the rotational movement to the wheel 3 and which brakes it. In fact, the hub 6 is composed of the containment drum of the jaws to stop / brake the rotational stroke of the wheels 3.

The reversible connection means 4 have, in addition, a second shaft 8 keyed to connection means 2 and having a second connection joint 9 connected in rotation to the second shaft 8.

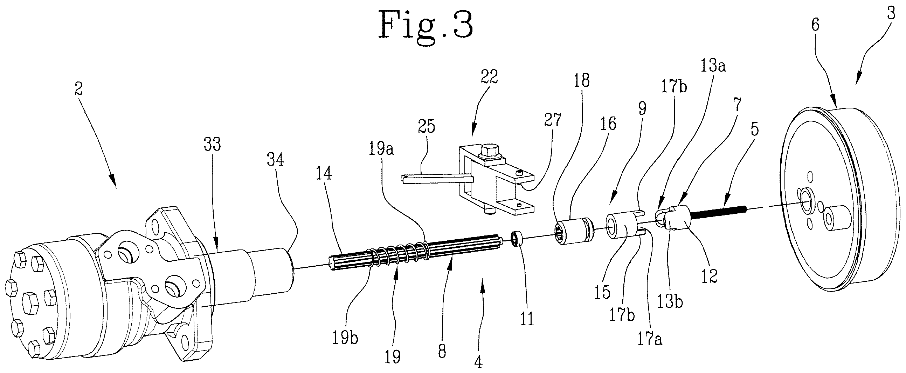

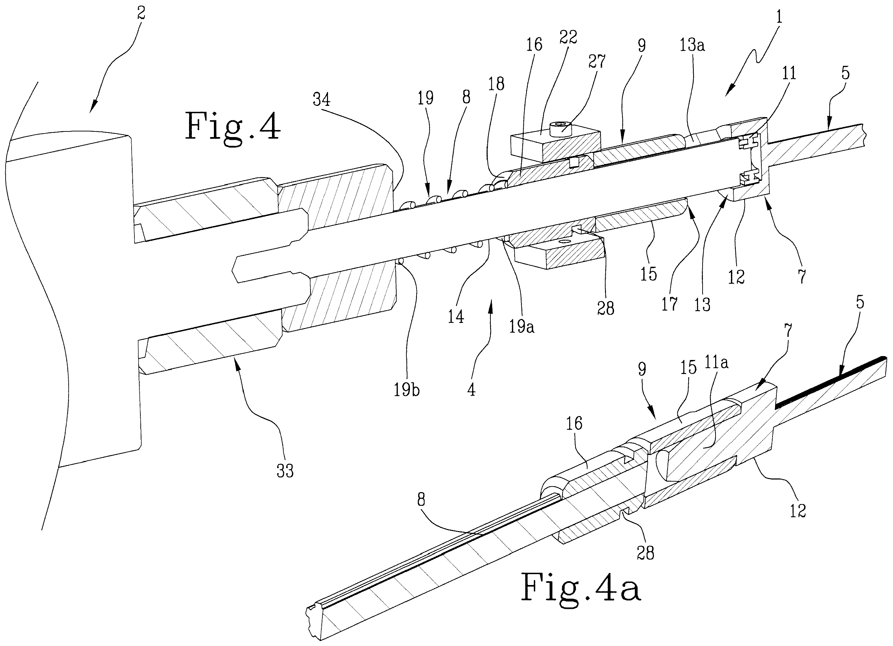

In this situation, the shafts 5, 8 are coaxially engaged with each other by means of a respective bearing 11 interposed between the shafts 5, 8. The bearing 11, which is best illustrated in Figures 3 and 4, is adapted to allow the rotation of one of the two shafts relative to the other shaft, for example in the case in which the wheel 3 is moved idle (freely), and thus the first shaft 5 to rotate with respect to the second shaft 8.

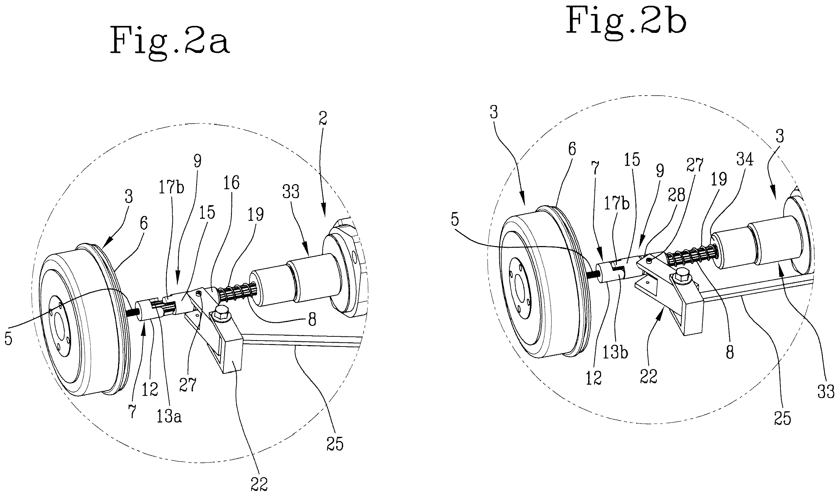

Again, the connection member 4 comprises means for moving 10 the second joint 9 to axially slide said second joint 9 along the longitudinal extension of the second shaft 8 between a connection configuration to the first joint 7 in which the movement of the means 2 is transmitted to the wheel 3 (figures 1b and 2b) and a disconnection configuration from the first joint 7 in which movement is not transmitted (figures 1a and 2a). It is to be noted that in the disconnection condition the bearing 11 releases in rotation the two shafts 5, 8 coaxially engaged with each other.

In greater detail, the first shaft 5 has respective opposite ends respectively connected to said hub 6 (not described in detail) and to the first joint 7. The first joint 7 has a sleeve 12 coaxially engaged to the end of the first shaft 5 distal from the hub 6.

The sleeve 12 has a substantially cylindrical shape and is internally hollow to house said bearing 11.

The sleeve also has an annular end 13 having at least one interlocking seat 13a next to at least one projecting portion 13b. Preferably, the annular end 13 has a toothed ring in which a plurality of interlocking seats 13a alternate with respective projecting portions 13b.

The second shaft 8 has a grooved outer surface 14, i.e. provided with a plurality of longitudinal grooves.

In this situation, the second joint 9 comprises a first 15 and a second sleeve 16 coaxially engaged with each other and keyed on the second shaft 8 to slide along the longitudinal extension of said second shaft 8.

In other words the first and second sleeves 15, 16 are coaxial and connected to each other to slide along the second shaft 8.

The first sleeve 15, which has a cylindrical shape with a circular cross-section, is provided with an inner cavity defined by a cylindrical inner surface which is spaced from the outer surface 14 of the second shaft 8 (Figure 4). The first sleeve 15 also has an annular end 17 distal from the second sleeve 16 having at least one interlocking seat 17a next to at least one projecting portion 17b.

Preferably, the annular end 17 has a toothed ring shape in which a plurality of interlocking seats 17a alternate with respective projecting portions 17b. In this situation, it is to be noted that the sleeve 12 of the first joint 7 and the first sleeve 15 of the second joint 9 have respective annular ends facing each other and respectively counter-shaped. Advantageously, each projecting portion 13b, 17b is insertable in the respective interlocking seats 13a, 17a of the adjacent sleeve to define said connection configuration. According to a further embodiment illustrated schematically in the view of Figure 4a, the shafts 5, 8 are not engaged with each other in the disconnected condition in which the movement is not transferred to the wheel 3.

In this situation, in fact, the bearing 11 is not provided and the shafts are coaxially engaged only when the second joint 9 is moved to couple to the first joint 7.

In greater detail, in this embodiment, the first joint 7 is provided with a substantially truncated cone element 11a extending from said first joint 7 towards the second shaft 8.

In particular, the truncated cone element 11a extends coaxially to the sleeve 12 and from inside said sleeve 12 to extend with a respective tapered end towards the second joint 9.

In addition, the transverse and longitudinal cross-section dimensions of the truncated cone element 11a are inferior to the dimensions of the inner compartment defined by the first sleeve 15 of the second joint 9.

As a result, in the mutually interlocked condition of the sleeves 12, 15 respectively of the first and second joint 7, 9, the truncated cone element 11a is inserted inside the first sleeve 15 (Figure 4a).

It should be noted in this situation that the first sleeve 15 of the second joint 9, approaching the first joint 7, is fitted on the aforementioned truncated cone element 11a to couple to it.

Advantageously, said truncated cone element 11a acts as a self-centering element to define a coaxial coupling of the two shafts 5, 8 and hence of the respective joints 7, 9. In other words, in this embodiment a self-centering system is provided that allows, in the coupling conditions of the joints 7, 9 the correct definition of the position of the two shafts (coaxial with each other).

This advantage is given precisely by the truncated cone shape of the element 11a and in particular by the flared end which facilitates the insertion of the element 11a inside the first sleeve 15 of the second joint 9.

With particular reference to Figure 4, it should be noted that the second sleeve 16 has a grooved inner cylindrical surface suitably coupled to the grooved outer surface 14 of the second shaft 8.

As a result, the second sleeve 16 and thus also the first sleeve 15 connected to it (the entire second joint 9) is moved in rotation by the second shaft 8.

The second sleeve 16 has an annular end distal from the first sleeve 15 and defining a contrast surface 18 on which a thrust element 19 acts to push the second joint 16 towards the first joint 15.

In particular, the thrust element 19 comprises a helical spring fitted around the second shaft 8 and having a first end 19a abutting on the contrast surface 18 and a second end 19b connected to the aforementioned means. Advantageously, the spring keeps the second joint 9 abutting on the first joint 5 in the connection condition (Figure 2b). The spring is thus compressed in the disconnected condition (Figure 2a).

The movement means 10 preferably comprise at least one clutch lever 20 interposed between the second joint 9 and an actuator to define the aforementioned connection and disconnection configurations.

According to an embodiment shown in the appended figures, the actuator 21 consists of a handle operatively utilisable by an operator. In this situation, the movement of the clutch lever 20 is carried out manually. However, it should be specified that the actuator 21 may be of any type, even automatic.

For example, suitable electromechanical systems may be provided that allow the automatic action of the joints 7, 9 to implement the respective connection / disconnection conditions.

In the embodiment which provides for manual operation, the handle 21, is not described in detail since of the known type, it is preferably housed in an easily accessible area of the trailer 100 such as for example at a side of the trailer 100. In this way, the lever 20 is adapted to move the second joint 9 as a function of the movement of the actuator 21.

In greater detail, with reference to Figures 1a and 1b, the means 10 comprise at least two levers 20, each of which is connected to a respective second joint 9 and to a single actuator 21. In this way, the actuator 21 provides for moving both joints 9 simultaneously, each of which is adapted to transfer the movement to a respective wheel.

According to a first embodiment in figures 1a and 1b, the lever 20 consists of a series of portions suitably hinged to each other to transfer the movement to a connection bracket 22 engaged to the second joint 9.

In particular, the clutch lever 20 is composed of a first rod 23 which bears the actuator 21 and which presents on the opposite side a forked end provided with two sliding pins 24. Each sliding pin 24 is housed in a slot 26 made longitudinally at the end of a respective second rod 25.

From the opposite side of the slot 26, each second rod 25 is engaged to the aforementioned connection bracket 22.

As is best illustrated in Figure 2a and 2b, the bracket 22 has a "C"-shaped element hinged to the second rod 25 and having a sliding roller 27 which extends perpendicular to the axis of longitudinal extension of the first and second shafts 5, 8.

The roller 27 is housed in an annular groove 28 made on the outer cylindrical surface of the second sleeve 16 to rotate inside it during the rotation of the second shaft 8 and of the second joint 9.

In other words, the roller 27 keeps the bracket 22 always operatively engaged to the second joint 9 even during the rotation of the same. Advantageously, as a result of the action on the actuator 21, the first rod 23 is moved to allow the sliding of the pins 24 inside the slots 26.

Consequently, the second rod 25 is moved away / towards the shafts 5, 8 in an oscillating movement which causes the rotation of the bracket around a respective axis of rotation.

As a result, the roller 27 engaged in the groove 28 is moved in a direction parallel to the longitudinal axis of the second shaft 8 to move the second joint 9 along said second shaft 8.

Figures 5 and 5b show a second embodiment according to the invention in which the clutch lever 20 has a different configuration but the same operating concept.

In this case, the clutch lever 20 is composed of a first rod 23 which has, on the side opposite the actuator 21, a longitudinal slot 29.

Inside the slot a pin 30 is slidably engaged extending transversely from a second central rod 31. At opposite ends of the central rod 31 two third rods 32 are respectively hinged, each of which is connected to the respective bracket 22. In this case also, each bracket 22, which has a different sizing compared to the first embodiment, is provided with a roller 27 sliding in the annular groove 28 of the second sleeve 16.

Advantageously, as a result of the manual or automatic action of the first actuator 21, the first rod 23 is moved to move the second central rod 31 away / towards the axle of the trailer 100.

During this movement, the pin 30 slides inside the slot 29 and the two third rods 32 are made to tilt to move the brackets 22 along the longitudinal extension of the shafts 5, 8.

It should however be specified that the linkage that engages and disengages the drive to the wheels may be of any type depending on various constructive requirements. Figure 6 illustrates, by way of example and without limitation, a view from below of a trailer 100 provided with system 1 showing the structure of the lever 20 and the respective actuator 21.

In this case, the connection of the lever 20 to the first rod 23 proves to be structurally different but conceptually identical to that specified above in which the manual or automatic action moves the second joint 9 to overcome the action of the spring and thus release the joints or to assist the action of the spring, and thus couple the joints to each other.

Preferably, the movement means 2 comprise a plurality of motors 33 each of which has a rotation shaft (not shown inasmuch as of the known type and not part of the present invention) keyed to the second shaft 8.

Each motor 33 may be of any type such as for example pneumatic, electric or internal combustion, according to the various embodiment requirements and is provided with suitable gearmotors depending on the various constructional requirements.

In addition, at least one contrast portion 34 of the motor 33 is provided, adapted to support the ends of the spring 19 opposite the second joint 9 (Figure 4).

The types, sizes and control members of the motors 33 are not further described as being of the known type and deriving from specific constructive choices in the construction of the respective trailers 100.

The present invention also relates to a method for moving trailers 100 comprising the steps of:
- providing at least one motor 33 for each wheel 3 of the trailer 100;
- providing the first shaft 5 keyed to the hub 6 of the wheel 3 and provided with a first joint 7;
- providing the second shaft 8 keyed to the motor 33 and having a second joint 9.

Subsequently, the clutch lever 20 is activated to couple / uncouple the first and second joints 7, 9 from each other and define a mechanical transmission connection / disconnection between the motor 3 and the respective wheel 2.

In particular, the step of operating the lever 20 comprises the sub-step of moving the second joint 9 along the longitudinal axis of the second shaft 8 towards the first joint 7 to define a mechanical coupling between the joints 7, 9. In this condition, the respective sleeves 12, 15 counter-shaped to each other are mechanically interlocked to transfer the rotational movement from the second joint 9 to the first joint 7.

The step of operating the lever 20 further comprises the sub-step of moving the second joint 9 along the longitudinal axis of the second shaft 8 away from the first joint 7 to release the relative sleeves 12, 15 from each other. In this case, as best seen in Fig. 2b, the movement of the second joint 9 compresses the spring 19 interposed between said second joint 9 and the motor 33.

Conversely, when the second joint 9 is brought closer to the first to define the mechanical coupling, the spring 19 favours the movement of said second joint 9 to ensure the mechanical coupling in rotation.

The present invention described above has important advantages and achieves the intended purposes.

In the first place, the movement system 1 makes it possible to assist and facilitate the manual movement of the trailer 100, thus avoiding efforts by the operator in the movement operations.

In fact, by acting manually or automatically on the actuator 21 it is possible to actuate and power the wheels 2 making them active. Advantageously, after such motorization the system 1 can be disconnected to return to a condition in which the wheels are mounted idle (passively).

Furthermore, the system 1 makes it possible to significantly reduce the fuel consumption of the towing vehicle and consequently the emission of pollutants, even with very high load masses. This advantage is given by the fact that manoeuvres with trailers 100 of high masses, typically performed with a motor vehicle, can be avoided.

Finally, another important advantage of the present invention is given by the versatility of the system 1 which can be easily applied to all types of trailers 100.

## Claims

1. A movement system for vehicle trailers **characterised in that** it comprises:
- movement means (2) operatively associable to at least one wheel (3) of said trailer (100);
- at least one reversible connection member (4) to be interposed between the movement means (2) and the respective wheel (3); said member (4) having:
- a first shaft (5) having a first connection joint (7) connected in rotation to the first shaft (5);
- a second shaft (8) keyed to said movement means (2) and having a second connection joint (9) connected in rotation to said second shaft (8); and
- means for moving (10) the second joint (9) to axially slide the second joint (9) along the longitudinal extension of the second shaft (8) between a connection configuration to the first joint (7) in which the movement of the means (2) is transmittable to the wheel (3) and a disconnection configuration from the first joint (7) in which movement is not transmittable,
**characterized in that**
the first shaft (5) is to be keyed to a hub (6) of the wheel (3).

2. The system according to the preceding claim, **characterised in that** said movement means (10) comprise at least one clutch lever (20) interposed between said second joint (9) and an actuator (21) to define said connection and disconnection configurations; said clutch lever (20) moving the second joint (9) depending on the movement of the actuator (21).

3. The system according to the preceding claim **characterised in that** it comprises at least two levers (20), each of which connected to a respective second joint (9) and to a single actuator (21); said actuator (21) moving both second joints (9) simultaneously.

4. The system according to any of the preceding claims, **characterised in that** said movement means (2) comprise a plurality of motors (33) each of which having a rotation shaft keyed on the second shaft (8); said second shaft (8) having at least one longitudinal groove.

5. The system according to the preceding claim, **characterised in that** said second joint (9) comprises a first and a second sleeve (15, 16) coaxially engaged with each other and keyed on the second shaft (8) to slide along the longitudinal extension of said second shaft (8); said first sleeve (15) presenting a cylindrical inner surface distanced from the outer surface (14) of the second shaft (8) and said second sleeve (16) presenting a cylindrical and grooved inner surface, coupled to the outer grooved surface (14) of the second shaft (8).

6. The system according to the preceding claim, **characterised in that** said first sleeve (15) has an annular end (17) distal from the second sleeve (16) having at least one interlocking seat (17a) next to at least one projecting portion (17b).

7. The system according to claim 5 or 6, **characterised in that** said second sleeve (16) has an annular end distal from the first sleeve (15) and defining a contrast surface (18); said connection member (4) further comprising a thrust element (19) acting on the contrast surface (18) to push the second joint (9) towards the first joint (7).

8. The system according to the preceding claim, **characterised in that** said thrust element (19) comprises a helical spring fitted around the second shaft (8) and having a first end (19a) abutting on the contrast surface (18) and a second end (19b) connected to a contrast portion (34) of said motor (33).

9. The system according to any of the claims from 5 to 8, **characterised in that**: said second sleeve (16) has an annular groove (28) made on a respective outer cylindrical surface; said movement means (10) having a connection element associated with the clutch lever on the opposite side to the actuator (21) and provided with at least one sliding roller (27) housed in said annular groove (28) to rotate inside it during the rotation of the second shaft (8) and of the second joint (9).

10. The system according to any of the claims from 6 to 9, **characterised in that**: said first joint (7) has a sleeve (12) coaxially engaged at one end of the first shaft (5) distal from said hub (6); said sleeve (12) having an annular end (13) having at least one interlocking seat (13a) next to at least one projecting portion (13b).

11. The system according to the preceding claim, **characterised in that** said sleeve (12) of the first joint (7) and said first sleeve (15) of the second joint (9) have respective annular ends (13, 17) facing each other and respectively counter-shaped; each projecting portion (13b, 17b) being insertable in the respective interlocking seats (13a, 17a) of the adjacent sleeve to define said connection configuration.

12. The system according to the preceding claim, **characterised in that** said sleeve (12) of the first joint (7) further comprises a truncated cone element (11a) fitting inside the first sleeve (15) of the second joint (9) in said connection configuration; said truncated cone element (11a) defining a self-centering member between the shafts (5, 8) in the connection configuration in which they are arranged coaxially.

13. A movement method for vehicle trailers **characterised in that** it comprises the steps of:
- providing at least one motor (33) for each wheel (3) of the trailer (100);
- providing a first shaft (5) keyed to the hub (6) of the wheel (3) and provided with a first joint (7);
- providing a second shaft (8) keyed to the motor (33) and having a second joint (9);
- actuating a clutch lever (20) to couple / uncouple the first and second joints (7, 9) from each other and define a mechanical transmission connection / disconnection between the motor (33) and the respective wheel (3).

14. The method according to the preceding claim, **characterised in that** said step of actuating the lever (20) comprises the sub-step of moving the second joint (9) along the longitudinal axis of the second shaft (8) towards the first joint (7) to define a mechanical coupling between the joints in which the respective sleeves (12, 15) counter-shaped to each other are mechanically interlocked to transfer the rotational movement from the second joint (9) to the first joint (7).

15. The method according to claim 13 or 14, **characterised in that** said step of actuating the lever (20) comprises the sub-step of moving the second joint (9) along the longitudinal axis of the second shaft (8) away from the first joint (7) to release the relative sleeves from each other; said movement of the second joint (9) defining the compression of a spring (19) interposed between said second joint (9) and the motor (33).

16. The method according to any of the claims from 13 to 15, **characterised in that** said spring (19) acts on said second joint (9) in order to assist the coupling action of the joints and keep the second joint (9) coupled to the first joint (7).

## Patentansprüche

1. Bewegungssystem für Fahrzeuganhänger, **dadurch gekennzeichnet, dass** es umfasst:
- Bewegungsmittel (2), die betriebswirksam mit mindestens einem Rad (3) des Anhängers (100) assoziierbar sind;
- mindestens ein umschaltbares Verbindungselement (4), das zwischen den Bewegungsmitteln (2) und dem jeweiligen Rad (3) angeordnet sein soll;
wobei das Element (4) aufweist:
- eine erste Welle (5) mit einem ersten Verbindungsgelenk (7), das in Drehung mit der ersten Welle (5) verbunden ist;
- eine zweite Welle (8), die mit den Bewegungsmitteln (2) verkeilt ist und ein zweites Verbindungsgelenk (9) aufweist, das in Drehung mit der zweiten Welle (8) verbunden ist; und
- Mittel zum Bewegen (10) des zweiten Gelenks (9), um das zweite Gelenk (9) entlang der Längsverlängerung der zweiten Welle (8) zwischen einer Verbindungskonfiguration zum ersten Gelenk (7), in dem die Bewegung der Mittel (2) übertragbar auf das Rad (3) ist, und eine Trennkonfiguration vom ersten Gelenk (7) zu gleiten, in der eine Bewegung nicht übertragbar ist, **dadurch gekennzeichnet, dass** die erste Welle (5) mit einer Nabe (6) des Rades (3) verkeilt ist.

2. System nach dem vorhergehenden Anspruch, **dadurch gekennzeichnet, dass** die Bewegungsmittel (10) mindestens einen Kupplungshebel (20) umfassen, der zwischen dem zweiten Gelenk (9) und einem Aktuator (21) angeordnet ist, um die Verbindungs- und Trennkonfigurationen zu definieren; wobei der Kupplungshebel (20) das zweite Gelenk (9) in Abhängigkeit von der Bewegung des Aktuators (21) bewegt.

3. System nach dem vorhergehenden Anspruch, **dadurch gekennzeichnet, dass** es mindestens zwei Hebel (20) umfasst, von denen jeder mit einem jeweiligen zweiten Gelenk (9) und einem einzelnen Aktuator (21) verbunden ist; wobei der Aktuator (21) beide zweiten Gelenke (9) gleichzeitig bewegt.

4. System nach einem der vorhergehenden Ansprüche, **dadurch gekennzeichnet, dass** die Bewegungsmittel (2) eine Vielzahl an Motoren (33) umfassen, von denen jeder eine auf der zweiten Welle (8) verkeilte Drehwelle aufweist; wobei die zweite Welle (8) mindestens eine Längsnut aufweist.

5. System nach dem vorhergehenden Anspruch, **dadurch gekennzeichnet, dass** das zweite Gelenk (9) eine erste und eine zweite Hülse (15, 16) umfasst, die koaxial miteinander in Eingriff stehen und auf der zweiten Welle (8) verkeilt sind, um entlang der Längsverlängerung der zweiten Welle (8) zu gleiten; wobei die erste Hülse (15) eine von der Außenfläche (14) der zweiten Welle (8) beabstandete zylindrische Innenfläche aufweist und die zweite Hülse (16) eine zylindrische und gerillte Innenfläche aufweist, die mit der gerillten Außenfläche (14) der zweiten Welle (8) gekoppelt ist.

6. System nach dem vorhergehenden Anspruch, **dadurch gekennzeichnet, dass** die erste Hülse (15) ein ringförmiges Ende (17) distal von der zweiten Hülse (16) aufweist, das mindestens einen Verriegelungssitz (17a) neben mindestens einem vorspringenden Abschnitt (17b) aufweist.

7. System nach Anspruch 5 oder 6, **dadurch gekennzeichnet, dass** die zweite Hülse (16) ein ringförmiges Ende distal von der ersten Hülse (15) aufweist und eine Kontrastfläche (18) definiert; wobei das Verbindungselement (4) zudem ein Schubelement (19) umfasst, das auf die Kontrastfläche (18) wirkt, um das zweite Gelenk (9) in Richtung des ersten Gelenks (7) zu drücken.

8. System nach dem vorhergehenden Anspruch, **dadurch gekennzeichnet, dass** das Schubelement (19) eine Schraubenfeder umfasst, die um die zweite Welle (8) herum angebracht ist und ein erstes Ende (19a) aufweist, das an der Kontrastfläche (18) anliegt, und ein zweites Ende (19b), das mit einem Kontrastabschnitt (34) des Motors (33) verbunden ist.

9. System nach einem der Ansprüche von 5 bis 8, **dadurch gekennzeichnet, dass**: die zweite Hülse (16) eine ringförmige Nut (28) aufweist, die auf einer jeweiligen zylindrischen Außenfläche ausgebildet ist; wobei die Bewegungsmittel (10) ein Verbindungselement aufweisen, das mit dem Kupplungshebel auf der dem Aktuator (21) gegenüberliegenden Seite assoziiert ist und mit mindestens einer Gleitrolle (27) versehen ist, die in der ringförmigen Nut (28) untergebracht ist, um sich während der Drehung der zweiten Welle (8) und des zweiten Gelenks (9) darin zu drehen.

10. System nach einem der Ansprüche von 6 bis 9, **dadurch gekennzeichnet, dass**: das erste Gelenk (7) eine Hülse (12) aufweist, die an einem Ende der ersten Welle (5) distal von der Nabe (6) koaxial in Eingriff steht; wobei die Hülse (12) ein ringförmiges Ende (13) mit mindestens einem Verriegelungssitz (13a) neben mindestens einem vorspringenden Abschnitt (13b) aufweist.

11. System nach dem vorhergehenden Anspruch, **dadurch gekennzeichnet, dass** die Hülse (12) des ersten Gelenks (7) und die erste Hülse (15) des zweiten Gelenks (9) jeweils einander zugewandte ringförmige und jeweils gegengeformte Enden (13, 17) aufweisen; ein jeder vorspringender Abschnitt (13b, 17b) kann in die jeweiligen Verriegelungssitze (13a, 17a) der benachbarten Hülse eingesetzt werden, um die Verbindungskonfiguration zu definieren.

12. System nach dem vorhergehenden Anspruch, **dadurch gekennzeichnet, dass** die Hülse (12) des ersten Gelenks (7) zudem ein Kegelstumpfelement (11a) umfasst, das in die erste Hülse (15) des zweiten Gelenks (9) in der Verbindungskonfiguration angebracht ist; wobei das Kegelstumpfelement (11a) ein selbstzentrierendes Element zwischen den Wellen (5, 8) in der Verbindungskonfiguration definiert, in der sie koaxial angeordnet sind.

13. Bewegungsverfahren für Fahrzeuganhänger, **dadurch gekennzeichnet, dass** es die Schritte umfasst:
- Bereitstellen von mindestens einem Motor (33) für jedes Rad (3) des Anhängers (100);
- Bereitstellen einer ersten Welle (5), die mit der Nabe (6) des Rades (3) verkeilt und mit einem ersten Gelenk (7) versehen ist;
- Bereitstellen einer zweiten Welle (8), die mit dem Motor (33) verkeilt ist und ein zweites Gelenk (9) aufweist;
- Betätigen eines Kupplungshebels (20) zum Koppeln/Entkoppeln des ersten und zweiten Gelenks (7, 9) voneinander und Definieren einer mechanischen Übertragungsverbindung/-trennung zwischen dem Motor (33) und dem jeweiligen Rad (3).

14. Verfahren nach dem vorhergehenden Anspruch, **dadurch gekennzeichnet, dass** der Schritt zum Betätigen des Hebels (20) den Teilschritt zum Bewegen des zweiten Gelenks (9) entlang der Längsachse der zweiten Welle (8) in Richtung des ersten Gelenks (7) umfasst, um eine mechanische Kopplung zwischen den Gelenken zu definieren, in der die jeweiligen zueinander gegengeformte Hülsen (12, 15) mechanisch verriegelt sind, um die Drehbewegung vom zweiten Gelenk (9) auf das erste Gelenk (7) zu übertragen.

15. Verfahren nach Anspruch 13 oder 14, **dadurch gekennzeichnet, dass** der Schritt zum Betätigen des Hebels (20) den Teilschritt zum Bewegen des zweiten Gelenks (9) entlang der Längsachse der zweiten Welle (8) wegführend vom ersten Gelenk (7) umfasst, um die relativen Hülsen voneinander zu lösen; wobei die Bewegung des zweiten Gelenks (9) die Kompression einer Feder (19) definiert, die zwischen dem zweiten Gelenk (9) und dem Motor (33) angeordnet ist.

16. Verfahren nach einem der Ansprüche von 13 bis 15, **dadurch gekennzeichnet, dass** die Feder (19) auf das zweite Gelenk (9) wirkt, um die Kopplungswirkung der Gelenke zu unterstützen und das zweite Gelenk (9) mit dem ersten Gelenk (7) gekoppelt zu halten.

## Revendications

1. Système de déplacement destiné à des remorques de véhicules **caractérisé en ce qu'**il comprend :
- des moyens de déplacement (2) pouvant être associés fonctionnellement à au moins une roue (3) de ladite remorque (100) ;
- au moins un élément de liaison (4) réversible à interposer entre les moyens de déplacement (2) et la roue (3) respective ;
ledit élément (4) comportant :
- un premier arbre (5) comportant une première articulation de liaison (7) reliée en rotation au premier arbre (5) ;
- un second arbre (8) calé sur lesdits moyens de déplacement (2) et comportant une seconde articulation de liaison (9) reliée en rotation au dit second arbre (8) ; et
- des moyens pour déplacer (10) la seconde articulation (9) pour faire coulisser axialement la seconde articulation (9) le long de l'extension longitudinale du second arbre (8) entre une configuration de raccordement à la première articulation (7), dans laquelle le mouvement des moyens (2) peut être transmis à la roue (3), et une configuration de décrochage de la première articulation (7) dans laquelle le mouvement ne peut pas être transmis, **caractérisé en ce que** le premier arbre (5) doit être calé sur un moyeu (6) de la roue (3).

2. Système selon la revendication précédente, **caractérisé en ce que** lesdits moyens de déplacement (10) comprennent au moins un levier d'embrayage (20) interposé entre ladite seconde articulation (9) et un actionneur (21) pour définir lesdites configurations de raccordement et de décrochage ; ledit levier d'embrayage (20) déplaçant la seconde articulation (9) en fonction du mouvement de l'actionneur (21).

3. Système selon la revendication précédente, **caractérisé en ce qu'**il comprend au moins deux leviers (20), chacun d'eux étant relié à une seconde articulation (9) respective et à un seul actionneur (21) ; ledit actionneur (21) déplaçant à la fois les deux articulations (9) simultanément.

4. Système selon l'une quelconque des revendications précédentes, **caractérisé en ce que** lesdits moyens de déplacement (2) comprennent une pluralité de moteurs (33) chacun comportant un arbre de rotation calé sur le second arbre (8) ; ledit second arbre (8) comportant au moins une rainure longitudinale.

5. Système selon la revendication précédente, **caractérisé en ce que** ladite seconde articulation (9) comprend un premier et un second manchon (15, 16) se mettant en prise coaxialement l'un avec l'autre et calés sur le second arbre (8) pour coulisser le long de l'extension longitudinale dudit second arbre (8) ; ledit premier manchon (15) présentant une surface intérieure cylindrique éloignée de la surface extérieure (14) du second arbre (8) et ledit second manchon (16) présentant une surface intérieure cylindrique et rainurée couplée à la surface rainurée extérieure (14) du second arbre (8).

6. Système selon la revendication précédente, **caractérisé en ce que** ledit premier manchon (15) comporte une extrémité annulaire (17) distale du second manchon (16) comportant au moins un siège de verrouillage (17a) à côté d'au moins une partie en saillie (17b).

7. Système selon la revendication 5 ou 6, **caractérisé en ce que** ledit second manchon (16) comporte une extrémité annulaire distale du premier manchon (15) et définissant une surface d'opposition (18) ; ledit élément de liaison (4) comprenant de plus un élément de poussée (19) agissant sur la surface d'opposition (18) pour pousser la seconde articulation (9) vers la première articulation (7).

8. Système selon la revendication précédente, **caractérisé en ce que** ledit élément de poussée (19) comprend un ressort hélicoïdal monté autour du second arbre (8) et comportant une première extrémité (19a) se mettant en butée contre la surface d'opposition (18) et une seconde extrémité (19b) reliée à une partie d'opposition (34) dudit moteur (33).

9. Système selon l'une quelconque des revendications de 5 à 8, **caractérisé en ce que** ledit second manchon (16) comporte une rainure annulaire (28) réalisée sur une surface cylindrique extérieure respective ; lesdits moyens de déplacement (10) comportant un élément de liaison associé au levier d'embrayage sur le côté opposé à l'actionneur (21) et pourvu d'au moins un rouleau coulissant (27) logé dans ladite rainure annulaire (28) pour tourner à l'intérieur de celle-ci pendant la rotation du second arbre (8) et de la seconde articulation (9).

10. Système selon l'une quelconque des revendications de 6 à 9, **caractérisé en ce que** ladite première articulation (7) comporte un manchon (12) se mettant en prise coaxialement avec une extrémité du premier arbre (5) distal dudit moyeu (6) ; ledit manchon (12) comportant une extrémité annulaire (13) comportant au moins un siège de verrouillage (13a) à côté d'au moins une partie en saillie (13b).

11. Système selon la revendication précédente, **caractérisé en ce que** ledit manchon (12) de la première articulation (7) et ledit premier manchon (15) de la seconde articulation (9) comportent des extrémités annulaires (13, 17) respectives se faisant face et respectivement de forme complémentaire ; chaque partie en saillie (13b, 17b) pouvant être introduite dans les sièges de verrouillage (13a, 17a) respectifs du manchon adjacent pour définir ladite configuration de raccordement.

12. Système selon la revendication précédente, **caractérisé en ce que** ledit manchon (12) de la première articulation (7) comprend de plus un élément tronconique (11a) s'adaptant à l'intérieur du premier manchon (15) de la seconde articulation (9) dans ladite configuration de raccordement ; ledit élément tronconique (11a) définissant un élément auto-centrant entre les arbres (5, 8) dans la configuration de raccordement dans laquelle ils sont disposés coaxialement.

13. Méthode de déplacement pour remorques de véhicules **caractérisé en ce qu'**il comprend les étapes de :
- prévoir au moins un moteur (33) pour chaque roue (3) de la remorque (100) ;
- prévoir un premier arbre (5) calé sur le moyeu (6) de la roue (3) et pourvu d'une première articulation (7) ;
- prévoir un second arbre (8) calé sur le moteur (33) et comportant une seconde articulation (9) ;
- actionner un levier d'embrayage (20) pour accoupler/désaccoupler les première et seconde articulations (7, 9) l'une de l'autre et définir un raccordement/décrochage de transmission mécanique entre le moteur (33) et la roue respective (3).

14. Méthode selon la revendication précédente, **caractérisé en ce que** ladite étape consistant à actionner le levier (20) comprend la sous-étape consistant à déplacer la seconde articulation (9) le long de l'axe longitudinal du second arbre (8) vers la première articulation (7) pour définir un couplage mécanique entre les articulations dans lequel les manchons respectifs (12, 15) de forme complémentaire l'un par rapport à l'autre sont mécaniquement verrouillés pour transférer le mouvement de rotation de la seconde articulation (9) à la première articulation (7) .

15. Méthode selon la revendication 13 ou 14, **caractérisé en ce que** ladite étape consistant à actionner le levier (20) comprend la sous-étape consistant à éloigner la seconde articulation (9), le long de l'axe longitudinal du second arbre (8), de la première articulation (7) pour libérer les manchons respectifs l'un de l'autre ; ledit mouvement de la seconde articulation (9) définissant la compression d'un ressort (19) interposé entre ladite seconde articulation (9) et le moteur (33).

16. Méthode selon l'une quelconque des revendications de 13 à 15, **caractérisé en ce que** ledit ressort (19) agit sur ladite seconde articulation (9) afin d'assister l'action d'accouplement des articulations et de maintenir la seconde articulation (9) couplée à la première articulation (7).
